# EUROPEAN PATENT APPLICATION

(11) **EP 4 749 248 A1**
(43) Date of publication of application: **27.05.2026**
(21) Application number: 25209080.8
(22) Date of filing: 16.10.2025
(51) Int. Cl.: G01F 1/684, G01F 15/14, G01N 33/00, G01F 15/18, G01N 25/00

(54) **SYSTEM FOR PERFORMING FLUID ANALYSIS**

(30) Priority: 20.11.2024 US 202418953520
(71) Applicant: Honeywell International Inc., Charlotte, NC 28202 (US)
(72) Inventor: SPELDRICH, Jamie, Charlotte, 28202 (US); HINTZ, Fred, Charlotte, 28202 (US); SORENSON II, Richard Charles, Charlotte, 28202 (US); CROSS, Karina, Charlotte, 28202 (US); MYERS, Ronald W., Charlotte, 28202 (US)
(74) Representative: Haseltine Lake Kempner LLP

(57) **Abstract**

An example system and associated methods are provided herein. In some embodiments, the system includes a support structure. In some embodiments, the system includes a sensing die disposed on the support structure. In some embodiments, the system includes a fluid guide. In some embodiments, the fluid guide is supported by the sensing die at a first location and supported by the support structure at a second location and a third location. In some embodiments, the fluid guide defines a flow path configured to receive a fluid. In some embodiments, the sensing die comprises a sensing portion configured to measure one or more properties of the fluid in the flow path.

## Description

### TECHNOLOGICAL FIELD

Embodiments of the present disclosure relate generally to a system for performing fluid analysis.

### BACKGROUND

Applicant has identified many technical challenges and difficulties associated with performing fluid analysis. Through applied effort, ingenuity, and innovation, Applicant has solved problems related to fluid analysis by developing solutions embodied in the present disclosure, which are described in detail below.

### BRIEF SUMMARY

Various embodiments described herein relate to a system for performing fluid analysis.

In accordance with one aspect of the disclosure, a system is provided. In some embodiments, the system includes a support structure. In some embodiments, the system includes a sensing die disposed on the support structure. In some embodiments, the system includes a fluid guide. In some embodiments, the fluid guide is supported by the sensing die at a first location and supported by the support structure at a second location and a third location. In some embodiments, the fluid guide defines a flow path configured to receive a fluid. In some embodiments, the sensing die comprises a sensing portion configured to measure one or more properties of the fluid in the flow path.

In some embodiments, the support structure comprises a printed circuit board (PCB).

In some embodiments, the flow path comprises a bottom surface.

In some embodiments, the bottom surface is level with the sensing portion of the sensing die.

In some embodiments, at least a portion of a top surface of an encapsulant is level with the sensing portion of the sensing die.

In some embodiments, at the first location a bottom surface of a wall of the fluid guide is disposed on a support portion of a top surface of the sensing die.

In some embodiments, the fluid guide defines an access area.

In some embodiments, the access area is separated from the flow path by at least a wall of the fluid guide.

In some embodiments, the access area is separated from the flow path by at least an encapsulant.

In some embodiments, the system includes an encapsulant disposed on the support structure.

In some embodiments, the encapsulant is disposed on the support structure such that the encapsulant is in contact with the fluid guide and at least one side wall of the sensing die.

In some embodiments, at the second location a first support protrusion of the fluid guide is disposed on a top surface of the support structure and at the third location a second support protrusion of the fluid guide is disposed on the top surface of the support structure.

In some embodiments, the first support protrusion and the second support protrusion are located on a bottom surface of the fluid guide.

In some embodiments, at least a portion of a bottom surface of the fluid guide is separated from a top surface of the support structure by an air gap.

In some embodiments, the flow path is configured to receive the fluid via an inlet portion of the fluid guide and discharge the fluid via an outlet portion of the fluid guide.

In some embodiments, the support structure comprises one or more electrical connectors and fluid analysis circuitry.

In some embodiments, one or more of the one or more electrical connectors connect the sensing die to the fluid analysis circuitry.

In some embodiments, the one or more properties comprise a flow rate.

In some embodiments, the one or more properties comprises a thermal conductivity or a viscosity.

In accordance with another aspect of the disclosure, a system is provided.

In some embodiments, the system includes a support structure. In some embodiments, the system includes a sensing die disposed on the support structure. In some embodiments, the system includes a fluid guide. In some embodiments, the fluid guide is supported by the sensing die at a first location and supported by the support structure at a second location and a third location. In some embodiments, the fluid guide defines a flow path configured to receive a fluid. In some embodiments, the sensing die comprises a sensing portion configured to measure one or more properties of the fluid in the flow path. In some embodiments, the system includes a housing surrounding the support structure, the sensing die, and a central portion of the fluid guide.

In some embodiments, the fluid guide comprises an inlet portion and an outlet portion.

In some embodiments, the inlet portion and the outlet portion protrude outwardly from the housing.

In accordance with another aspect of the disclosure a method of manufacturing is provided. In some embodiments, the method of manufacturing includes providing a support structure. In some embodiments, the method of manufacturing includes disposing a sensing die on the support structure. In some embodiments, the method of manufacturing includes disposing a fluid guide on the support structure and the sensing die. In some embodiments, the fluid guide is disposed on the support structure and the sensing die such that the fluid guide is supported by the sensing die at a first location and supported by the support structure at a second location and a third location. In some embodiments, the fluid guide defines a flow path configured to receive a fluid. In some embodiments, the sensing die comprises a sensing portion configured to measure one or more properties of the fluid in the flow path.

In some embodiments, the method of manufacturing includes disposing an encapsulant on the support structure.

In some embodiments, the encapsulant is disposed on the support structure such that the encapsulant is in contact with the fluid guide and at least one side wall of the sensing die.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a perspective view of a system in accordance with one or more embodiments of the present disclosure;
FIG. 2 illustrates a partial perspective view of a system in accordance with one or more embodiments of the present disclosure;
FIG. 3 illustrates a partial perspective view of a system in accordance with one or more embodiments of the present disclosure;
FIG. 4 illustrates a partial perspective view of a system in accordance with one or more embodiments of the present disclosure;
FIG. 5 illustrates a partial perspective view of a system in accordance with one or more embodiments of the present disclosure;
FIG. 6 illustrates a partial cross-sectional view of a system in accordance with one or more embodiments of the present disclosure;
FIG. 7 illustrates a perspective view of a sensing die in accordance with one or more embodiments of the present disclosure;
FIG. 8 illustrates a partial top view of an example system in accordance with one or more embodiments of the present disclosure;
FIG. 9 illustrates a partial perspective view of a system in accordance with one or more embodiments of the present disclosure;
FIG. 10 illustrates a partial perspective view of a system in accordance with one or more embodiments of the present disclosure;
FIG. 11 illustrates a partial perspective view of a system in accordance with one or more embodiments of the present disclosure;
FIG. 12 illustrates a partial perspective view of a system in accordance with one or more embodiments of the present disclosure;
FIG. 13 illustrates a partial cross-sectional view of a system in accordance with one or more embodiments of the present disclosure;
FIG. 14 illustrates a partial perspective view of a system in accordance with one or more embodiments of the present disclosure; and
FIG. 15 illustrates a flow chart of an example method in accordance with one or more embodiments of the present disclosure.

### DETAILED DESCRIPTION

Example embodiments will be described more fully hereinafter with reference to the accompanying drawings, in which some, but not all embodiments of disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

### Overview

Example embodiments disclosed herein address technical problems associated with systems for performing fluid analysis. As would be understood by one skilled in the field to which this disclosure pertains, there are numerous example scenarios in which systems for performing fluid analysis are desirable.

In many applications, it may be desirable to perform fluid analysis. For example, it may be desirable to perform fluid analysis of a fluid to measure one or more properties of a fluid, such as a flow rate of the fluid. In many applications, it may be desirable to perform fluid analysis on a fluid that is flowing. For example, it may be desirable to perform fluid analysis on a fluid that is flowing through a tube. In this way, fluid analysis may be performed without interrupting one or more processes that depend on the flowing fluid. In many applications, it may be desirable to perform fluid analysis using a system that is constructed using a repeatable method. For example, it may be desirable to perform fluid analysis using a system that is at least partially constructed using plastic molding. In this way, numerous alike systems can be rapidly constructed and used for performing fluid analysis in numerous applications.

Example solutions for systems for performing fluid analysis including using a sensor to measure one or more properties of a fluid. However, such example solutions are inaccurate, inefficient, and inconsistent. For example, such example solutions are inaccurate because such example solutions are prone to sensor drift. In this regard, for example, such example solutions are prone to sensor drift because such example solutions are unable to create a stable flow path in proximity to a sensor that is measuring one or more properties of a fluid. As a result, such example solutions are unable to obtain stable measurements of one or more properties of a fluid over time. As another example, such example solutions are inefficient because such example solutions are unable to perform fluid analysis while the fluid is moving. As a result, in such example solutions, one or more processes that depend upon on fluid flow must be interrupted in order to perform fluid analysis on the fluid. As another example, such example solutions are inconsistent because such example solutions are not designed to tolerate variations in the dimensions of the system introduced through the construction process (e.g., variations in the dimensions of a plastic component of a system introduced in a plastic molding construction process). As a result, such example solutions often fail prematurely and/or must be reconstructed before being used due to their inability to tolerate variations in the dimensions of the system introduced through the construction process. Accordingly, there is a need for systems for performing fluid analysis in an accurate, an efficient, and a consistent manner.

Thus, to address these and/or other issue related to systems for performing fluid analysis, example systems and an associated method are provided here. For example, an embodiment in this disclosure, described in greater detail below, includes a system that includes a support structure. In some embodiments, the system includes a sensing die disposed on the support structure. In some embodiments, the system includes a fluid guide. In some embodiments, the fluid guide is supported by the sensing die at a first location and supported by the support structure at a second location and a third location. In some embodiments, the fluid guide defines a flow path configured to receive a fluid. In some embodiments, the sensing die comprises a sensing portion configured to measure one or more properties of the fluid in the flow path. Accordingly, the example systems and associated methods provided herein enable performance of fluid analysis in an accurate, an efficient, and a consistent manner.

### Example System

Embodiments of the present disclosure herein include a system 102 for performing fluid analysis. It should be readily appreciated that the embodiments of the system 102 described herein may be configured in various additional and alternative manners in addition to those expressly described herein.

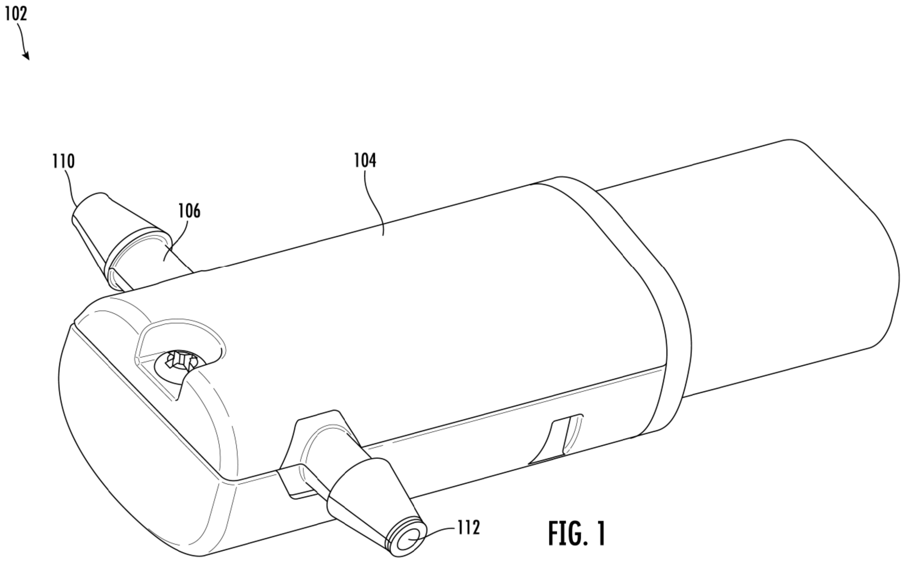

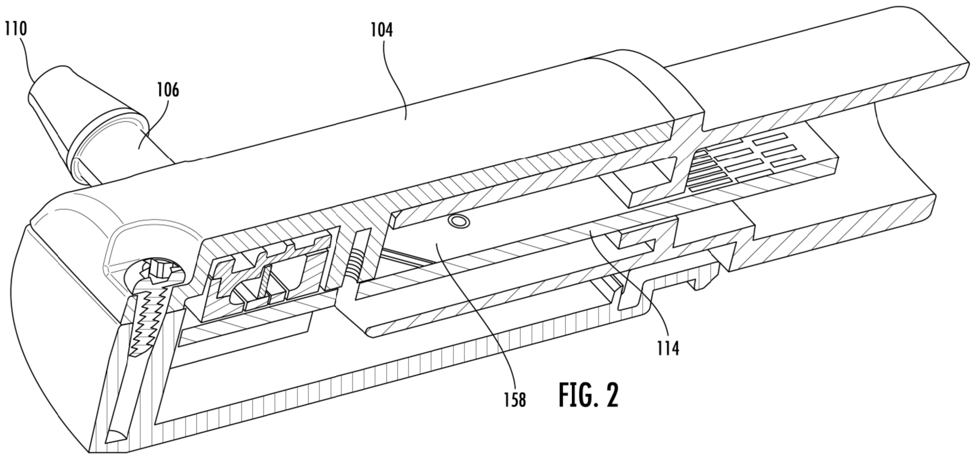

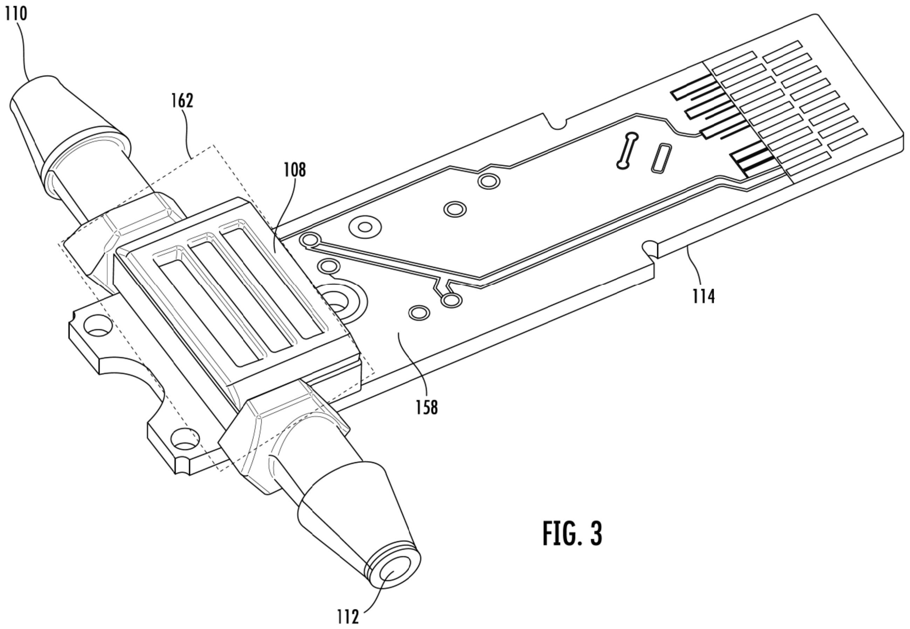

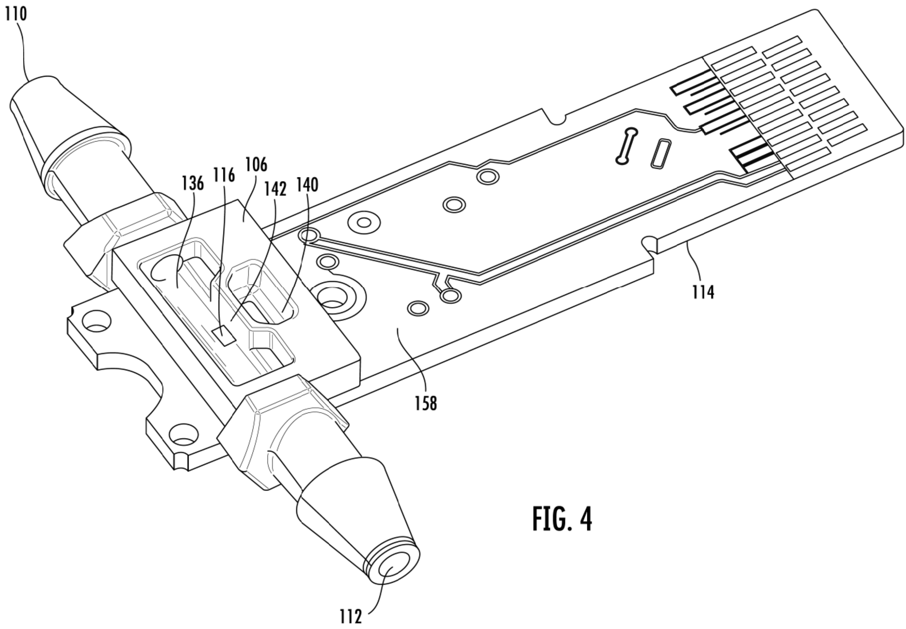

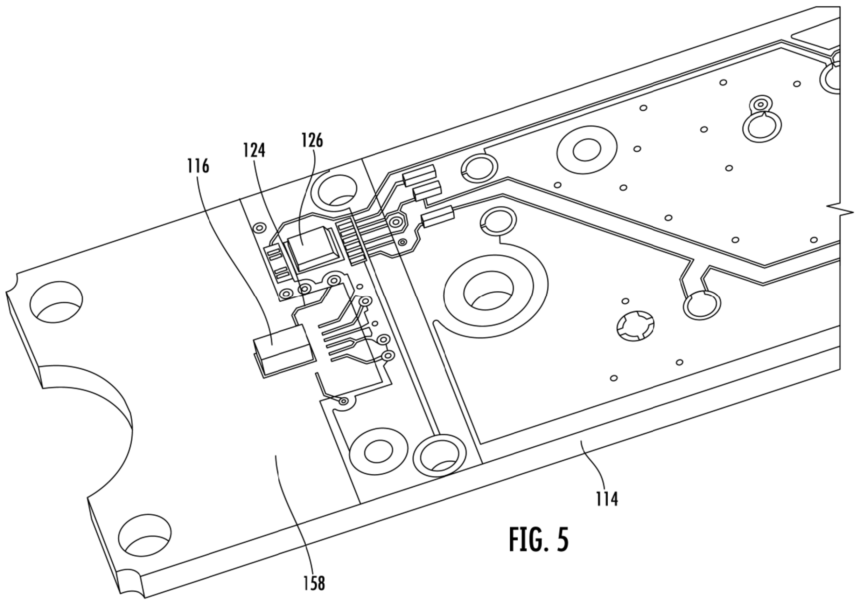

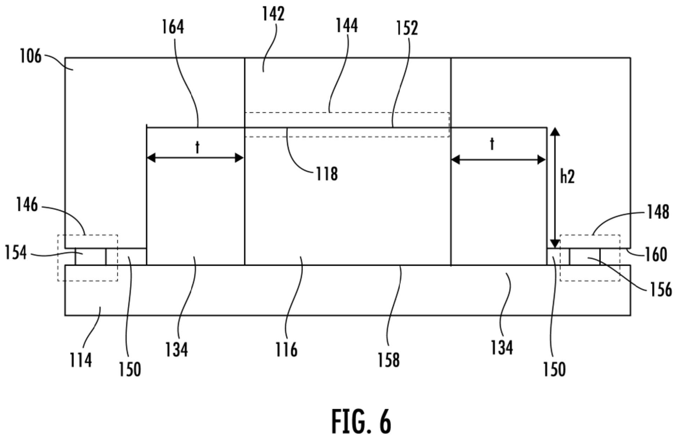

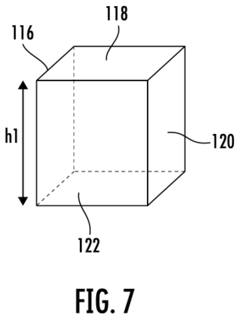

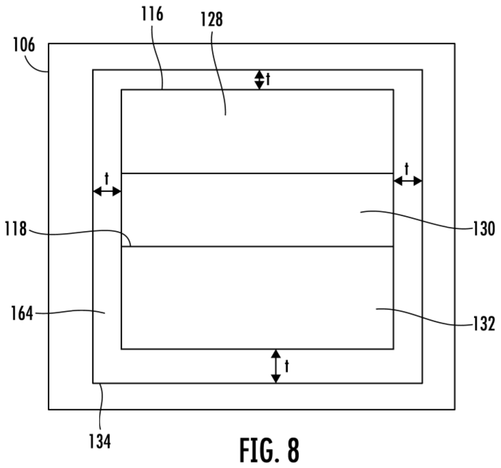

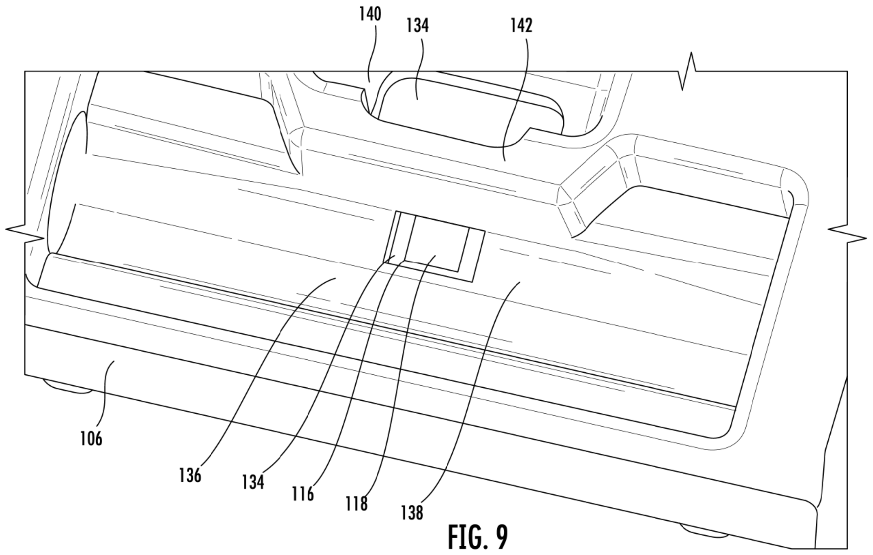

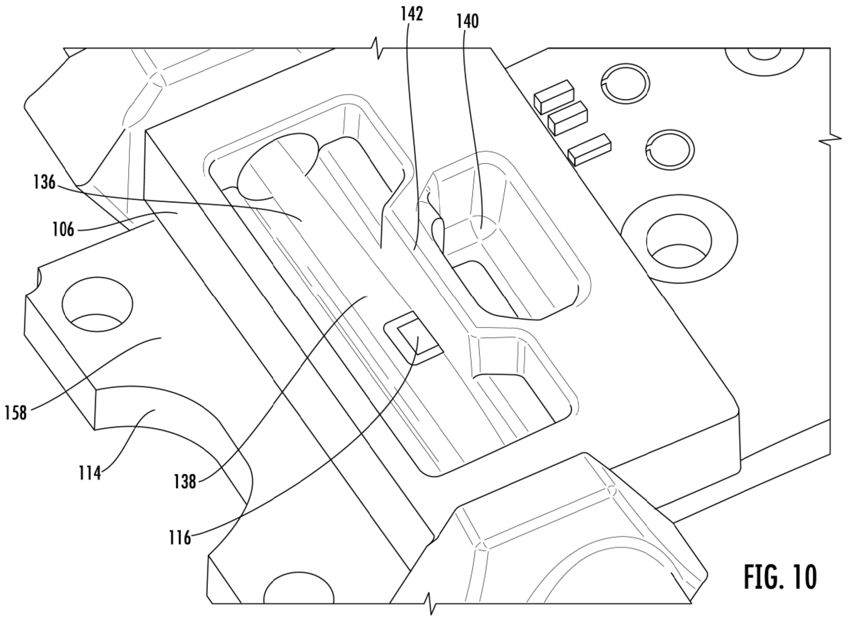

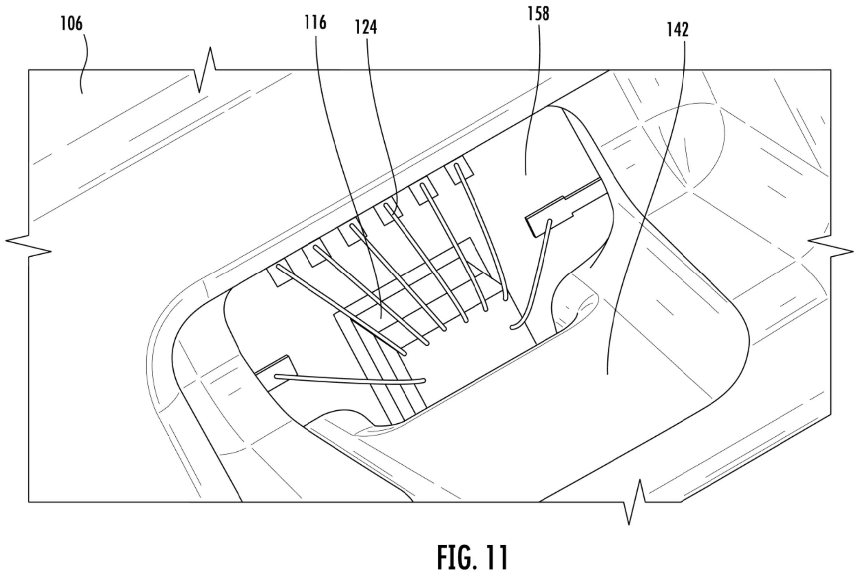

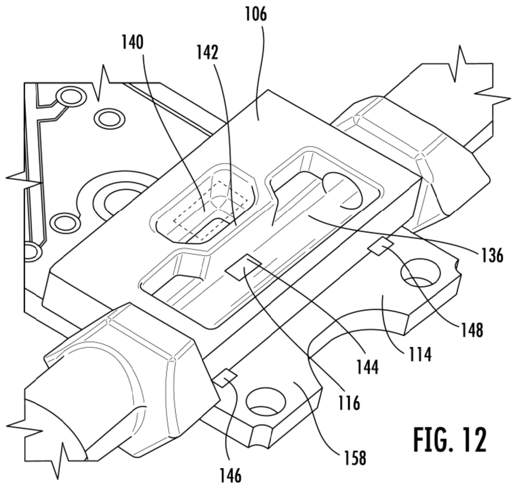

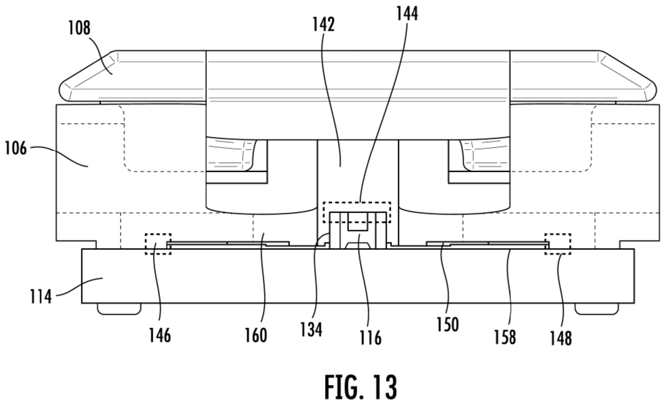

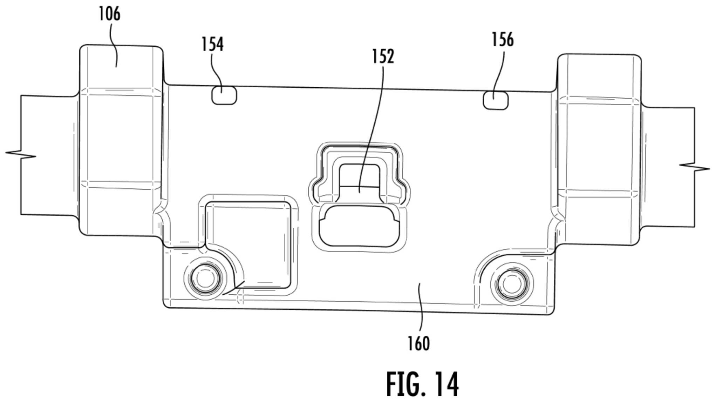

With reference to FIGS. 1-14, a system 102 for performing fluid analysis is illustrated. In this regard, for example, the system 102 may be configured to perform analysis on a gas, liquid, and/or the like. In some embodiments, performing fluid analysis includes the system 102 being configured to measure one or more properties of a fluid. In some embodiments, the one or more properties of a fluid include a flow rate of a fluid. In this regard, for example, the system 102 may be configured to measure the flow rate of a fluid. In some embodiments, the one or more properties of a fluid include a thermal conductivity of a fluid. In this regard, for example, the system 102 may be configured to measure the thermal conductivity of a fluid. In some embodiments, the one or more properties of a fluid include a viscosity of a fluid. In this regard, for example, the system 102 may be configured to measure the viscosity of a fluid. In some embodiments, by measuring the flow rate, thermal conductivity, and/or viscosity of a fluid, the system 102 is configured to identify a fluid (e.g., the type of fluid that the fluid is).

In some embodiments, the system 102 includes a support structure 114. In some embodiments, the support structure 114 is any structure capable of supporting a fluid guide 106, a sensing die 116, an encapsulant 134, and/or any structure, device, and/or the like configured to facilitate measurement of one or more properties of a fluid. For example, the support structure 114 may be a printed circuit board (PCB). In some embodiments, the support structure 114 comprises one or more of plastic, metal, composite materials, insulating materials, conductive materials, and/or the like. In some embodiments, the support structure 114 includes one or more surfaces. For example, the support structure 114 may include a top surface 158.

In some embodiments, the support structure 114 includes fluid analysis circuitry 126. In some embodiments, the fluid analysis circuitry 126 includes an application-specific integrated circuit. In some embodiments, the fluid analysis circuitry 126 is configured to facilitate fluid analysis. For example, the fluid analysis circuitry 126 may be configured to facilitate measurement of a flow rate of a fluid, a thermal conductivity of a fluid, and/or a viscosity of a fluid. As another example, based on a measured flow rate of a fluid, a measured thermal conductivity of a fluid, and/or a measured viscosity of a fluid, the fluid analysis circuitry 126 may be configured to identify a fluid. In some embodiments, the support structure 114 includes one or more electrical connectors 124. In some embodiments, the one or more electrical connectors 124 include one or more wires, traces (e.g., conductive traces), and/or the like. In some embodiments, one or more of the one or more electrical connectors 124 are connected to the fluid analysis circuitry 126.

In some embodiments, the system 102 includes a sensing die 116. In some embodiments, the sensing die 116 is any shape suitable for facilitating fluid analysis. For example, the sensing die 116 may be a rectangular prism (e.g., a cube), cylinder, sphere, and/or any other suitable shape. In some embodiments, the sensing die 116 includes one or more side walls 120. For example, when the sensing die 116 is a rectangular prism, the one or more side walls 120 may include four side walls.

In some embodiments, the sensing die 116 includes a bottom surface 122. In some embodiments, the sensing die 116 is disposed on the support structure 114. In this regard, in some embodiments, the bottom surface 122 of the sensing die 116 is fixed to, secured to, attached to, supported by, and/or in contact with the top surface 158 of the support structure 114. For example, the bottom surface 122 of the sensing die 116 may be fixed to the top surface 158 of the support structure 114 via an adhesive, screw, fastener, and/or the like.

In some embodiments, the sensing die 116 includes a top surface 118. In some embodiments, the top surface 118 of the sensing die 116 includes a sensing portion 132. In some embodiments, the sensing portion 132 is configured to measure one or more properties of a fluid. In some embodiments, the sensing portion 132 is configured to measure one or more properties of a fluid as the fluid flows across the sensing portion 132. For example, the sensing portion 132 may be configured to measure a flow rate of a fluid as the fluid flows across the sensing portion 132.

In some embodiments, the top surface 118 of the sensing die 116 includes a connecting portion 128. In some embodiments, the connecting portion 128 is connected to one or more of the one or more electrical connectors 124. In this regard, in some embodiments, one or more of the one or more electrical connectors 124 connect the sensing die 116 to the fluid analysis circuitry 126. For example, one or more measurements made by the sensing portion 132 of the sensing die 116 may be provided to the fluid analysis circuitry 126 via the connecting portion 128 and/or one or more of the one or more electrical connectors 124.

In some embodiments, the top surface 118 of the sensing die 116 includes a support portion 130. In some embodiments, the support portion 130 is configured to at least partially support one or more other components of the system 102. In some embodiments, the support portion 130 is between the connecting portion 128 and the sensing portion 132 on the top surface 118 of the sensing die 116. In this regard, for example, the connecting portion 128 may be located at an upper portion of the top surface 118, the support portion 130 may be located at a middle portion of the top surface 118, and the sensing portion 132 may be located at a lower portion of the top surface 118.

In some embodiments, the system 102 includes a fluid guide 106. In some embodiments, the fluid guide 106 comprises one or more of plastic, metal, composite materials, and/or any other suitable material for facilitating measurement of one or more properties of a fluid. For example, the fluid guide 106 may be a molded piece of plastic. In some embodiments, the fluid guide 106 includes a central portion 162. In some embodiments, the fluid guide 106 includes an inlet portion 110. In some embodiments, the fluid guide 106 is configured to receive a fluid via the inlet portion 110. For example, the inlet portion 110 may include an opening through which the fluid guide 106 is configured to receive a fluid. In some embodiments, the fluid guide 106 includes an outlet portion 112. In some embodiments, the fluid guide 106 is configured to discharge a fluid via the outlet portion 112. For example, the outlet portion 112 may include an opening through which the fluid guide 106 is configured to discharge a fluid.

In some embodiments, the inlet portion 110 is configured to be connected to one or more tubes that provide a fluid to the system 102 via the inlet portion 110. In some embodiments, the outlet portion 112 is configured to be connected to one or more tubes that receive the fluid discharged by the system 102 via the outlet portion 112. Although described herein as the inlet portion 110 being configured to receive a fluid and the outlet portion 112 being configured to discharge a fluid, it would be understood by one skilled in the field to which this disclosure pertains that the inlet portion 110 may be configured to discharge a fluid and the outlet portion 112 may be configured to receive a fluid.

In some embodiments, the fluid guide 106 defines a flow path 136. In some embodiments, the flow path 136 is a portion of the fluid guide 106 through which a fluid may flow. For example, the flow path 136 may be a chamber through which fluid flows. In some embodiments, a fluid may flow through the flow path 136 from the inlet portion 110 to the outlet portion 112. In some embodiments, the flow path 136 includes a bottom surface 138.

In some embodiments, the fluid guide 106 defines an access area 140. In some embodiments, the access area 140 is a portion of the fluid guide 106 through which at least a portion of the sensing die 116 may be accessed. For example, the access area 140 may be a portion of the fluid guide 106 through which the connecting portion 128 of the sensing die 116 may be accessed. In some embodiments, the fluid guide 106 includes a cover 108. In some embodiments, the cover 108 enables access to the flow path 136 and/or the access area 140 during construction of the system 102. For example, the cover 108 may enable access to the flow path 136 and/or the access area 140 during construction of the system 102 to dispose the encapsulant 134 on the support structure 114. Additionally, or alternatively, the cover 108 may seal the flow path 136 and/or the access area 140. For example, after the encapsulant 134 has been disposed on the support structure 114, the cover 108 may be used to seal the flow path 136 and/or the access area 140.

In some embodiments, the fluid guide 106 includes a wall 142. In some embodiments, the access area 140 is separated from the flow path 136 by at least the wall 142 of the fluid guide 106. For example, the wall 142 may at least partially separate the flow path 136 and the access area 140. In some embodiments, the wall 142 includes a bottom surface 152.

In some embodiments, the fluid guide 106 is supported by the sensing die 116. In some embodiments, the fluid guide 106 is supported by the sensing die 116 at a first location 144. In some embodiments, at the first location 144 the bottom surface 152 of the wall 142 is disposed on the support portion 130 of the top surface 118 of the sensing die 116. In this regard, in some embodiments, the bottom surface 152 of the wall 142 of the fluid guide 106 is fixed to, secured to, attached to, supported by, and/or in contact with the support portion 130 of the top surface 118 of the sensing die 116. For example, the bottom surface 152 of the wall 142 of the fluid guide 106 may be fixed to the support portion 130 of the top surface 118 of the sensing die 116 via an adhesive, screw, fastener, and/or the like.

In some embodiments, the fluid guide 106 includes a first support protrusion 154. In some embodiments, the fluid guide 106 includes a second support protrusion 156. In some embodiments, the first support protrusion 154 and/or the second support protrusion 156 are located on a bottom surface 160 of the fluid guide 106 and extend outwardly from the bottom surface 160 of the fluid guide 106. In this regard, for example, the fluid guide 106 may be created (e.g., molded) such that the bottom surface 160 of the fluid guide 106 includes the first support protrusion 154 and/or the second support protrusion 156 that extend outwardly form the bottom surface 160 of the fluid guide 106.

In some embodiments, the fluid guide 106 is supported by the support structure 114. In some embodiments, the fluid guide 106 is supported by the support structure 114 at a second location 146. In some embodiments, at the second location 146 the first support protrusion 154 is disposed on the top surface 158 of the support structure 114. In this regard, in some embodiments, the first support protrusion 154 is fixed to, secured to, attached to, supported by, and/or in contact with the top surface 158 of the support structure 114. For example, the first support protrusion 154 may be fixed to the top surface 158 of the support structure 114 via an adhesive, screw, fastener, and/or the like.

Additionally, or alternatively, the fluid guide 106 is supported by the support structure 114 at a third location 148. In some embodiments, at the third location 148 the second support protrusion 156 is disposed on the top surface 158 of the support structure 114. In this regard, in some embodiments, the second support protrusion 156 is fixed to, secured to, attached to, supported by, and/or in contact with the top surface 158 of the support structure 114. For example, the second support protrusion 156 may be fixed to the top surface 158 of the support structure 114 via an adhesive, screw, fastener, and/or the like. Said differently, for example, the fluid guide 106 may be supported at a first location 144, a second location 146, and/or a third location 148.

In some embodiments, at least a portion of the bottom surface 160 of the fluid guide 106 is separated from the top surface 158 of the support structure 114 by an air gap 150. In this regard, in some embodiments, one or more structural variations in the fluid guide 106 may be accounted for by the air gap 150. Said differently, for example, the fluid guide 106 may be constructed using a process (e.g., plastic molding) that introduces slight variations into the dimensions of the fluid guide 106 compared to the design dimensions of the fluid guide 106. As such, in some embodiments, by supporting the fluid guide 106 at a first location 144, a second location 146, and/or a third location 148 to ensure there is an air gap 150 between at least a portion of the bottom surface 160 of the fluid guide 106 and the top surface 158 of the support structure 114, the system 102 is able to tolerate slight variations in the dimensions of the fluid guide 106 as compared to the design dimensions of the fluid guide 106 (e.g., and still be used to perform fluid analysis).

In some embodiments, the system 102 includes the encapsulant 134. In some embodiments, the encapsulant 134 is disposed on the support structure 114. For example, the encapsulant 134 may be disposed on the top surface 158 of the support structure 114. In some embodiments, the encapsulant 134 occupies a space between the one or more side walls 120 of the sensing die 116 and the fluid guide 106. In this regard, in some embodiments, the encapsulant 134 is in contact with one or more of the one or more side walls 120 of the sensing die 116 and the fluid guide 106.

In some embodiments, the encapsulant 134 has a thickness (t) that is equal to the distance between at least one side wall of the one or more side walls 120 and the fluid guide 106. For example, the encapsulant 134 may have a thickness (t) between 0.15 millimeters and 0.30 millimeters. In this regard, in some embodiments, the distance between at least one side wall of the one or more side walls 120 and the fluid guide 106 may be between 0.15 millimeters and 0.30 millimeters. For example, the fluid guide 106 may be constructed (e.g., molded) such that the distance between at least one side wall of the one or more side walls 120 and the fluid guide 106 is between 0.15 millimeters and 0.30 millimeters when the fluid guide 106 is disposed on the support structure 114 and the sensing die 116. In some embodiments, the encapsulant 134 has a height (h2). In some embodiments, the height (h2) of the encapsulant 134 is approximately equal to a height (h1) of the sensing die 116.

In some embodiments, at least a portion of a top surface 164 of the encapsulant 134 is level with the top surface 118 of the sensing die 116. For example, a portion of the top surface 164 of the encapsulant 134 that is proximate the sensing portion 132 may be level with the top surface 118 of the sensing die 116. Additionally, or alternatively, the bottom surface 138 of the flow path 136 is level with the top surface 118 of the sensing die 116. Additionally, or alternatively, at least a portion of the top surface 164 of the encapsulant 134 is level with the bottom surface 138 of the flow path 136. Said differently, for example, the fluid guide 106, the sensing die 116, and the encapsulant 134 may be configured such that at least a portion of the top surface 164 of the encapsulant 134, the top surface 118 of the sensing die 116, and the bottom surface 138 of the flow path 136 are level with each other. In this regard, in some embodiments, the fluid may be able to flow over a continuous level surface as the fluid flows over the bottom surface 138 of the flow path 136, then over the top surface 164 of the encapsulant 134, then the top surface 118 of the sensing die 116. In some embodiments, by ensuring that the fluid is able to flow over a continuous level surface as the fluid approaches the sensing portion 132 of the sensing die 116, the system 102 is able to obtain a more accurate measurement of the one or more properties of the fluid (e.g., flow rate) and/or avoid sensor drift (e.g., measurement drift) over time.

In some embodiments, the access area 140 is separated from the flow path 136 by at least the encapsulant 134. In this regard, in some embodiments, the access area 140 and the flow path 136 may be isolated from each other by the encapsulant 134 and/or the wall 142 of the fluid guide 106. In some embodiments, by isolating the access area 140 and the flow path 136 from each other, fluid flowing through the flow path 136 may be prevented from entering the access area 140.

In some embodiments, the encapsulant 134 is disposed on the top surface 158 of the support structure 114 in a liquid form via the access area 140. In this regard, for example, the encapsulant 134 may seep into the flow path 136 and surround the sensing die 116 from all sides. In some embodiments, the encapsulant 134 may harden after it has surrounded the sensing die 116. In some embodiments, the encapsulant 134 is any material suitable for isolating the access area 140 and the flow path 136 from each other and/or for ensuring that the bottom surface 138 of the flow path 136, at least a portion of the top surface 164 of the encapsulant 134, and the top surface 118 of the sensing die 116 are level with each other. For example, the encapsulant 134 may be a low viscosity encapsulant, such as silicone, epoxy, or urethane. In some embodiments, the encapsulant 134 may be cured by heat (e.g., heat greater than room temperature), room temperature air, visible light, ultraviolet (UV) light, and/or moisture.

In some embodiments, the encapsulant 134 covers the connecting portion 128 of the sensing die 116. In this regard, for example, the encapsulant 134 may protect the connecting portion 128 of the sensing die 116 from corrosion and/or other damage. In some embodiments, the system 102 does not include the encapsulant 134. In this regard, for example, when the system 102 does not include the encapsulant 134 there may be a gap (e.g., a gap of air) in the space between the one or more side walls 120 of the sensing die 116 and the fluid guide 106.

In some embodiments, the system 102 includes a housing 104. In some embodiments, the housing 104 surrounds the support structure 114. Additionally, or alternatively, the housing 104 surrounds the sensing die 116. Additionally, or alternatively, the housing 104 surrounds the central portion 162 of the fluid guide 106. Said differently, for example, the support structure 114, the sensing die 116, and/or the central portion 162 of the fluid guide 106 may be enclosed in the housing 104. In some embodiments, the fluid guide 106 comprises one or more of plastic, metal, composite materials, and/or surrounding the support structure 114, the sensing die 116, and the central portion 162 of the fluid guide 106. In some embodiments, the inlet portion 110 and/or the outlet portion 112 protrude outwardly from the housing 104. For example, the inlet portion 110 may be protrude outwardly from a first side of the housing 104 and the outlet portion 112 may protrude outwardly from a second side of the housing 104.

### Example Methods

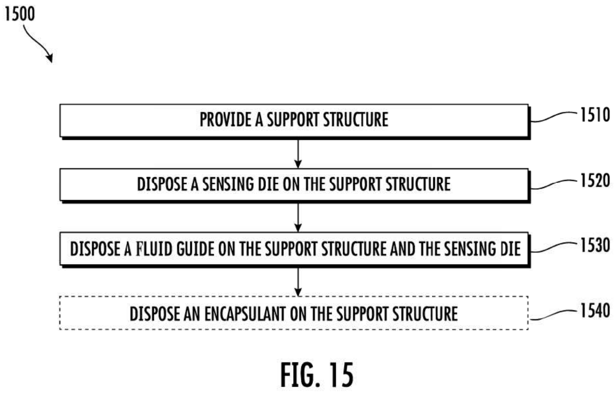

Referring now to FIG. 15, a flowchart providing an example method 1500. In some embodiments, the method 1500 is a method of manufacturing. For example, the method 1500 may be a method of manufacturing the system 102 and/or one or more components of the system 102.

As shown in block 1510, the method 1500 may include providing a support structure. As described above, in some embodiments, the support structure 114 is any structure capable of supporting a fluid guide 106, a sensing die 116, an encapsulant 134, and/or any structure, device, and/or the like configured to facilitate measurement of one or more properties of a fluid. For example, the support structure 114 may be a printed circuit board (PCB). In some embodiments, the support structure 114 comprises one or more of plastic, metal, composite materials, insulating materials, conductive materials, and/or the like. In some embodiments, the support structure 114 includes one or more surfaces. For example, the support structure 114 may include a top surface 158.

In some embodiments, the support structure 114 includes fluid analysis circuitry 126. In some embodiments, the fluid analysis circuitry 126 includes an application-specific integrated circuit. In some embodiments, the fluid analysis circuitry 126 is configured to facilitate fluid analysis. For example, the fluid analysis circuitry 126 may be configured to facilitate measurement of a flow rate of a fluid, a thermal conductivity of a fluid, and/or a viscosity of a fluid. As another example, based on a measured flow rate of a fluid, a measured thermal conductivity of a fluid, and/or a measured viscosity of a fluid, the fluid analysis circuitry 126 may be configured to identify a fluid. In some embodiments, the support structure 114 includes one or more electrical connectors 124. In some embodiments, the one or more electrical connectors 124 include one or more wires, traces (e.g., conductive traces), and/or the like. In some embodiments, one or more of the one or more electrical connectors 124 are connected to the fluid analysis circuitry 126.

As shown in block 1520, the method 1500 may include disposing a sensing die on the support structure. As described above, in some embodiments, the sensing die 116 is any shape suitable for facilitating fluid analysis. For example, the sensing die 116 may be a rectangular prism (e.g., a cube), cylinder, sphere, and/or any other suitable shape. In some embodiments, the sensing die 116 includes one or more side walls 120. For example, when the sensing die 116 is a rectangular prism, the one or more side walls 120 may include four side walls.

In some embodiments, the sensing die 116 includes a bottom surface 122. In some embodiments, the sensing die 116 is disposed on the support structure 114. In this regard, in some embodiments, the bottom surface 122 of the sensing die 116 is fixed to, secured to, attached to, supported by, and/or in contact with the top surface 158 of the support structure 114. For example, the bottom surface 122 of the sensing die 116 may be fixed to the top surface 158 of the support structure 114 via an adhesive, screw, fastener, and/or the like.

In some embodiments, the sensing die 116 includes a top surface 118. In some embodiments, the top surface 118 of the sensing die 116 includes a sensing portion 132. In some embodiments, the sensing portion 132 is configured to measure one or more properties of a fluid. In some embodiments, the sensing portion 132 is configured to measure one or more properties of a fluid as the fluid flows across the sensing portion 132. For example, the sensing portion 132 may be configured to measure a flow rate of a fluid as the fluid flows across the sensing portion 132.

In some embodiments, the top surface 118 of the sensing die 116 includes a connecting portion 128. In some embodiments, the connecting portion 128 is connected to one or more of the one or more electrical connectors 124. In this regard, in some embodiments, one or more of the one or more electrical connectors 124 connect the sensing die 116 to the fluid analysis circuitry 126. For example, one or more measurements made by the sensing portion 132 of the sensing die 116 may be provided to the fluid analysis circuitry 126 via the connecting portion 128 and/or one or more of the one or more electrical connectors 124.

In some embodiments, the top surface 118 of the sensing die 116 includes a support portion 130. In some embodiments, the support portion 130 is configured to at least partially support one or more other components of the system 102. In some embodiments, the support portion 130 is between the connecting portion 128 and the sensing portion 132 on the top surface 118 of the sensing die 116. In this regard, for example, the connecting portion 128 may be located at an upper portion of the top surface 118, the support portion 130 may be located at a middle portion of the top surface 118, and the sensing portion 132 may be located at a lower portion of the top surface 118.

As shown in block 1530, the method 1500 may include disposing a fluid guide on the support structure and the sensing die. As described above, in some embodiments, the fluid guide 106 comprises one or more of plastic, metal, composite materials, and/or any other suitable material for facilitating measurement of one or more properties of a fluid. For example, the fluid guide 106 may be a molded piece of plastic. In some embodiments, the fluid guide 106 includes a central portion 162. In some embodiments, the fluid guide 106 includes an inlet portion 110. In some embodiments, the fluid guide 106 is configured to receive a fluid via the inlet portion 110. For example, the inlet portion 110 may include an opening through which the fluid guide 106 is configured to receive a fluid. In some embodiments, the fluid guide 106 includes an outlet portion 112. In some embodiments, the fluid guide 106 is configured to discharge a fluid via the outlet portion 112. For example, the outlet portion 112 may include an opening through which the fluid guide 106 is configured to discharge a fluid.

In some embodiments, the inlet portion 110 is configured to be connected to one or more tubes that provide a fluid to the system 102 via the inlet portion 110. In some embodiments, the outlet portion 112 is configured to be connected to one or more tubes that receive the fluid discharged by the system 102 via the outlet portion 112. Although described herein as the inlet portion 110 being configured to receive a fluid and the outlet portion 112 being configured to discharge a fluid, it would be understood by one skilled in the field to which this disclosure pertains that the inlet portion 110 may be configured to discharge a fluid and the outlet portion 112 may be configured to receive a fluid.

In some embodiments, the fluid guide 106 defines a flow path 136. In some embodiments, the flow path 136 is a portion of the fluid guide 106 through which a fluid may flow. For example, the flow path 136 may be a chamber through which fluid flows. In some embodiments, a fluid may flow through the flow path 136 from the inlet portion 110 to the outlet portion 112. In some embodiments, the flow path 136 includes a bottom surface 138.

In some embodiments, the fluid guide 106 defines an access area 140. In some embodiments, the access area 140 is a portion of the fluid guide 106 through which at least a portion of the sensing die 116 may be accessed. For example, the access area 140 may be a portion of the fluid guide 106 through which the connecting portion 128 of the sensing die 116 may be accessed. In some embodiments, the fluid guide 106 includes a cover 108. In some embodiments, the cover 108 enables access to the flow path 136 and/or the access area 140 during construction of the system 102. For example, the cover 108 may enable access to the flow path 136 and/or the access area 140 during construction of the system 102 to dispose the encapsulant 134 on the support structure 114. Additionally, or alternatively, the cover 108 may seal the flow path 136 and/or the access area 140. For example, after the encapsulant 134 has been disposed on the support structure 114, the cover may be used to seal the flow path 136 and/or the access area 140.

In some embodiments, the fluid guide 106 includes a wall 142. In some embodiments, the access area 140 is separated from the flow path 136 by at least the wall 142 of the fluid guide 106. For example, the wall 142 may at least partially separate the flow path 136 and the access area 140. In some embodiments, the wall 142 includes a bottom surface 152.

In some embodiments, the fluid guide 106 is supported by the sensing die 116. In some embodiments, the fluid guide 106 is supported by the sensing die 116 at a first location 144. In some embodiments, at the first location 144 the bottom surface 152 of the wall 142 is disposed on the support portion 130 of the top surface 118 of the sensing die 116. In this regard, in some embodiments, the bottom surface 152 of the wall 142 of the fluid guide 106 is fixed to, secured to, attached to, supported by, and/or in contact with the support portion 130 of the top surface 118 of the sensing die 116. For example, the bottom surface 152 of the wall 142 of the fluid guide 106 may be fixed to the support portion 130 of the top surface 118 of the sensing die 116 via an adhesive, screw, fastener, and/or the like.

In some embodiments, the fluid guide 106 includes a first support protrusion 154. In some embodiments, the fluid guide 106 includes a second support protrusion 156. In some embodiments, the first support protrusion 154 and/or the second support protrusion 156 are located on a bottom surface 160 of the fluid guide 106 and extend outwardly from the bottom surface 160 of the fluid guide 106. In this regard, for example, the fluid guide 106 may be created (e.g., molded) such that the bottom surface 160 of the fluid guide 106 includes the first support protrusion 154 and/or the second support protrusion 156 that extend outwardly form the bottom surface 160 of the fluid guide 106.

In some embodiments, the fluid guide 106 is supported by the support structure 114. In some embodiments, the fluid guide 106 is supported by the support structure 114 at a second location 146. In some embodiments, at the second location 146 the first support protrusion 154 is disposed on the top surface 158 of the support structure 114. In this regard, in some embodiments, the first support protrusion 154 is fixed to, secured to, attached to, supported by, and/or in contact with the top surface 158 of the support structure 114. For example, the first support protrusion 154 may be fixed to the top surface 158 of the support structure 114 via an adhesive, screw, fastener, and/or the like.

Additionally, or alternatively, the fluid guide 106 is supported by the support structure 114 at a third location 148. In some embodiments, at the third location 148 the second support protrusion 156 is disposed on the top surface 158 of the support structure 114. In this regard, in some embodiments, the second support protrusion 156 is fixed to, secured to, attached to, supported by, and/or in contact with the top surface 158 of the support structure 114. For example, the second support protrusion 156 may be fixed to the top surface 158 of the support structure 114 via an adhesive, screw, fastener, and/or the like. Said differently, for example, the fluid guide 106 may be supported at a first location 144, a second location 146, and/or a third location 148.

In some embodiments, at least a portion of the bottom surface 160 of the fluid guide 106 is separated from the top surface 158 of the support structure 114 by an air gap 150. In this regard, in some embodiments, one or more structural variations in the fluid guide 106 may be accounted for by the air gap 150. Said differently, for example, the fluid guide 106 may be constructed using a process (e.g., plastic molding) that introduces slight variations into the dimensions of the fluid guide 106 compared to the design dimensions of the fluid guide 106. As such, in some embodiments, by supporting the fluid guide 106 at a first location 144, a second location 146, and/or a third location 148 to ensure there is an air gap 150 between at least a portion of the bottom surface 160 of the fluid guide 106 and the top surface 158 of the support structure 114, the system 102 is able to tolerate slight variations in the dimensions of the fluid guide 106 as compared to the design dimensions of the fluid guide 106 (e.g., and still be used to perform fluid analysis).

As shown in block 1540, the method 1500 may include disposing an encapsulant on the support structure. As described above, in some embodiments, the encapsulant 134 is disposed on the support structure 114. For example, the encapsulant 134 may be disposed on the top surface 158 of the support structure 114. In some embodiments, the encapsulant 134 occupies a space between the one or more side walls 120 of the sensing die 116 and the fluid guide 106. In this regard, in some embodiments, the encapsulant 134 is in contact with one or more of the one or more side walls 120 of the sensing die 116 and the fluid guide 106.

In some embodiments, the encapsulant 134 has a thickness (t) that is equal to the distance between at least one side wall of the one or more side walls 120 and the fluid guide 106. For example, the encapsulant 134 may have a thickness (t) between 0.15 millimeters and 0.30 millimeters. In this regard, in some embodiments, the distance between at least one side wall of the one or more side walls 120 and the fluid guide 106 may be between 0.15 millimeters and 0.30 millimeters. For example, the fluid guide 106 may be constructed (e.g., molded) such that the distance between at least one side wall of the one or more side walls 120 and the fluid guide 106 is between 0.15 millimeters and 0.30 millimeters when the fluid guide 106 is disposed on the support structure 114 and the sensing die 116. In some embodiments, the encapsulant 134 has a height (h2). In some embodiments, the height (h2) of the encapsulant 134 is approximately equal to a height (h1) of the sensing die 116.

In some embodiments, at least a portion of a top surface 164 of the encapsulant 134 is level with the top surface 118 of the sensing die 116. For example, a portion of the top surface 164 of the encapsulant 134 that is proximate the sensing portion 132 may be level with the top surface 118 of the sensing die 116. Additionally, or alternatively, the bottom surface 138 of the flow path 136 is level with the top surface 118 of the sensing die 116. Additionally, or alternatively, at least a portion of the top surface 164 of the encapsulant 134 is level with the bottom surface 138 of the flow path 136. Said differently, for example, the fluid guide 106, the sensing die 116, and the encapsulant 134 may be configured such that at least a portion of the top surface 164 of the encapsulant 134, the top surface 118 of the sensing die 116, and the bottom surface 138 of the flow path 136 are level with each other. In this regard, in some embodiments, the fluid may be able to flow over a continuous level surface as the fluid flows over the bottom surface 138 of the flow path 136, then over the top surface 164 of the encapsulant 134, then the top surface 118 of the sensing die 116. In some embodiments, by ensuring that the fluid is able to flow over a continuous level surface as the fluid approaches the sensing portion 132 of the sensing die 116, the system 102 is able to obtain a more accurate measurement of the one or more properties of the fluid (e.g., flow rate) and/or avoid sensor drift (e.g., measurement drift) over time.

In some embodiments, the access area 140 is separated from the flow path 136 by at least the encapsulant 134. In this regard, in some embodiments, the access area 140 and the flow path 136 may be isolated from each other by the encapsulant 134 and/or the wall 142 of the fluid guide 106. In some embodiments, by isolating the access area 140 and the flow path 136 from each other, fluid flowing through the flow path 136 may be prevented from entering the access area 140.

In some embodiments, the encapsulant 134 is disposed on the top surface 158 of the support structure 114 in a liquid form via the access area 140. In this regard, for example, the encapsulant 134 may seep into the flow path 136 and surround the sensing die 116 from all sides. In some embodiments, the encapsulant 134 may harden after it has surrounded the sensing die 116. In some embodiments, the encapsulant 134 is any material suitable for isolating the access area 140 and the flow path 136 from each other and/or for ensuring that the bottom surface 138 of the flow path 136, at least a portion of the top surface 164 of the encapsulant 134, and the top surface 118 of the sensing die 116 are level with each other. For example, the encapsulant 134 may be a low viscosity encapsulant, such as silicone, epoxy, or urethane. In some embodiments, the encapsulant 134 may be cured by heat (e.g., heat greater than room temperature), room temperature air, visible light, ultraviolet (UV) light, and/or moisture.

In some embodiments, the encapsulant 134 covers the connecting portion 128 of the sensing die 116. In this regard, for example, the encapsulant 134 may protect the connecting portion 128 of the sensing die 116 from corrosion and/or other damage. In some embodiments, the system 102 does not include the encapsulant 134. In this regard, for example, when the system 102 does not include the encapsulant 134 there may be a gap (e.g., a gap of air) in the space between the one or more side walls 120 of the sensing die 116 and the fluid guide 106.

Many modifications and other embodiments of the inventions set forth herein will come to mind to one skilled in the art to which these inventions pertain having the benefit of teachings presented in the foregoing descriptions and the associated drawings. Although the figures only show certain components of the fluid guide and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A system comprising:
a support structure;
a sensing die disposed on the support structure; and
a fluid guide, wherein the fluid guide is supported by the sensing die at a first location and supported by the support structure at a second location and a third location, wherein the fluid guide defines a flow path configured to receive a fluid, wherein the sensing die comprises a sensing portion configured to measure one or more properties of the fluid in the flow path.

2. The system of claim 1, wherein the support structure comprises a printed circuit board (PCB).

3. The system of claim 1, wherein the flow path comprises a bottom surface, wherein the bottom surface is level with the sensing portion of the sensing die.

4. The system of claim 3, wherein at least a portion of a top surface of an encapsulant is level with the sensing portion of the sensing die.

5. The system of claim 1, wherein at the first location a bottom surface of a wall of the fluid guide is disposed on a support portion of a top surface of the sensing die.

6. The system of claim 1, wherein the fluid guide defines an access area, wherein the access area is separated from the flow path by at least a wall of the fluid guide.

7. The system of claim 6, wherein the access area is separated from the flow path by at least an encapsulant.

8. The system of claim 6, further comprising:
an encapsulant disposed on the support structure, wherein the encapsulant is disposed on the support structure such that the encapsulant is in contact with the fluid guide and at least one side wall of the sensing die.

9. The system of claim 1, wherein at the second location a first support protrusion of the fluid guide is disposed on a top surface of the support structure and at the third location a second support protrusion of the fluid guide is disposed on the top surface of the support structure.

10. The system of claim 9, wherein the first support protrusion and the second support protrusion are located on a bottom surface of the fluid guide.

11. The system of claim 1, wherein at least a portion of a bottom surface of the fluid guide is separated from a top surface of the support structure by an air gap.

12. The system of claim 1, wherein the flow path is configured to receive the fluid via an inlet portion of the fluid guide and discharge the fluid via an outlet portion of the fluid guide.

13. The system of claim 1, wherein the support structure comprises one or more electrical connectors and fluid analysis circuitry, wherein one or more of the one or more electrical connectors connect the sensing die to the fluid analysis circuitry.

14. The system of claim 1, wherein the one or more properties comprise a flow rate.

15. A system comprising:
a support structure;
a sensing die disposed on the support structure;
a fluid guide, wherein the fluid guide is supported by the sensing die at a first location and supported by the support structure at a second location and a third location, wherein the fluid guide defines a flow path configured to receive a fluid, wherein the sensing die comprises a sensing portion configured to measure one or more properties of the fluid in the flow path; and
a housing surrounding the support structure, the sensing die, and a central portion of the fluid guide.
